# EUROPÄISCHE PATENTSCHRIFT

(11) **EP 0 643 205 B1**
(45) Veröffentlichungstag und Bekanntmachung des Hinweises auf die Patenterteilung: **18.06.1997**
(21) Anmeldenummer: 94112572.6
(22) Anmeldetag: 11.08.1994
(51) Int. Cl.: F02B 27/02

(54) **Luftansauganlage einer Brennkraftmaschine**
Air intake system for an internal combustion engine
Système d'admission d'air d'un moteur à combustion interne

(30) Priorität: 09.09.1993 DE 4330566
(43) Veröffentlichungstag der Anmeldung: 15.03.1995
(73) Patentinhaber: Dr.Ing.h.c. F. Porsche Aktiengesellschaft, 70435 Stuttgart (DE)
(72) Erfinder: Rutschmann, Erwin, D-75233 Tiefenbronn (DE)

(56) Entgegenhaltungen:
- EP-A- 0 159 803
- EP-A- 0 405 612
- DE-A- 3 424 433
- DE-A- 4 014 291
- US-A- 4 957 071
- PATENT ABSTRACTS OF JAPAN vol. 11, no. 318 (M-632) (2765) 16. Oktober 1987 & JP-A-62 101 821 (HONDA MOTOR CO LTD) 12. Mai 1987

## Beschreibung

Die Erfindung betrifft ein Luftansaugsystem einer mehrzylindrigen Brennkraftmaschine gemäß dem Oberbegriff des Patentanspruches 1.

Die Leistung einer Brennkraftmaschine ist direkt proportional zu dem Produkt aus ihrem Hubvolumen und dem Mitteldruck. Soll eine bezüglich Abgasmenge und Kraftstoffverbrauch ungünstige Vergrößerung des Hubvolumens vermieden werden, so bleibt zur Leistungssteigerung eine gezielte Erhöhung des Mitteldruckes.
Hierdurch steigt auch das Drehmoment der Brennkraftmaschine, da sich dieses direkt aus dem oben genannten Produkt ergibt.

Aus der DE-34 24 433 A1 ist ein gattungsgemäßes Luftansaugsystem mit zwei Resonanzbehältern bekannt. Diese sind untereinander mit zwei absperrbaren Resonanzrohren verbunden, in welches die zugeführte Frischluft einströmt. Von den Resonanzbehältern aus führen Einzelsaugrohre zu Einlaßkanälen der Zylinderköpfe. In Abhängigkeit des durch Drosselklappen gesteuerten Verbindungsquerschnittes der Behälter läßt sich der Mitteldruck und damit das Drehmoment in einem weiten Drehzahlbereich steigern.

Der Erfindung liegt die Aufgabe zugrunde, ein gattungsgemäßes Luftansaugsystem dahingehend zu verbessern, daß der Mitteldruck möglichst im gesamten Drehzahlbereich der Brennkraftmaschine gesteigert wird.

Die Lösung dieser Aufgabe gelingt mit den kennzeichnenden Merkmalen des Patentanspruches 1.
Vorteilhafte Ausgestaltungen der Erfindung sind in den abhängigen Ansprüchen benannt.

Wenn bei einer Brennkraftmaschine zusätzlich zu dem aus den Resonanzbehältern und dem Verbindungsrohr gebildeten Zweikammer-Resonanzsystem jedem Zylinder ein Resonanzrohr zugeordnet ist, welches sich von dem Resonanzbehälter der jeweiligen Zylinderreihe zu einem allen Resonanzrohren gemeinsamen Behälter erstreckt, wobei dieser einen Frischlufteintritt aufweist und mindestens in einem der Resonanzrohre einer Zylinderreihe ein steuerbares Absperrorgan angeordnet ist, so bewirkt dieser Behälter gemeinsam mit den Resonanzrohren, daß jedem Zylinder eine vergrößerte Frischluftmenge zugeführt wird, wodurch der Mitteldruck steigt. Mittels der steuerbaren Absperrorgane ist das jeweils zur Verfügung stehende Resonanzsystem an den aktuellen Drehzahlbereich der Brennkraftmaschine angepaßt, so daß ein gleichmäßiger, auf hohem Niveau liegender Drehmomentverlauf ohne spürbare Einbrüche gewährleistet ist.

In vorteilhafter Ausgestaltung können mehrere der Resonanzrohre einer Zylinderreihe Absperrorgane aufweisen, wodurch eine weitere verbesserte Anpassung des Resonanzsystems an die Drehzahl gewährleistet wird.

Dabei können die Resonanzrohre voneinander verschiedene Durchmesser und/oder Längen aufweisen, wodurch dem Erfordernis von vergleichsweisen langen und dünnen Rohren für einen günstigen Drehmomentverlauf im unteren Drehzahlbereich und relativ kurzen und im Durchmesser vergrößerten Rohren im oberen Drehzahlbereich Rechnung getragen wird.

Eine nochmals verbesserte Anpassung an die Erfordernisse der unterschiedlichen Drehzahlbereiche ist durch ein zweites, mit einem steuerbaren Steuerorgan versehenes Verbindungsrohr zwischen den Resonanzbehältern möglich, wobei dieses Rohr ebenso wie das erste als Resonanzrohr wirkt.

In weiterer, vorteilhafter Ausgestaltung lassen sich identische Rohrlängen von gegenüberliegenden Resonanzrohren und ein stömungsgünstiger, geradliniger Verlauf erzielen, wenn der Behälter in einer in Längsrichtung der Brennkraftmaschine verlaufenden Symmetrieebene angeordnet ist, zu der beabstandet und parallel verlaufend die Resonanzbehälter liegen.

Die dabei erforderlichen Resonanzrohrlängen lassen sich durch eine Anordnung des Behälters auf der der Brennkraftmaschine abgewandten Seite der Verbindungsrohre erzielen.

Optimale Einströmverhältnisse in die Saugrohre lassen sich erzielen, wenn die in den Resonanzbehältern liegenden Abschnitte der Resonanzrohre zylindrisch und fluchtend zu Einströmtrichtern der Saugrohre liegen. Dadurch entsteht zu keinem Kurbelwinkel ein Luftmangel vor einem Einströmtrichter etwa durch einen anderen, ansaugenden Zylinder.

Bei einer Brennkraftmaschine, die zusätzlich zu dem oder den von den Saugrohren versorgten, abschaltbaren Einlaßventilen permanent betriebene Einlaßventile aufweist, kann jedem Zylinder ein weiteres, direkt von dem Behälter zu diesem Ventil führendes Resonanzrohr zugeordnet sein. Hierdurch ist ein Emissionen reduzierender Betrieb in einem vergleichsweise niedrigen Leistungsbereich der Brennkraftmaschine möglich, während bei steigender Last bzw. Drehzahl die Absperrorgane schrittweise zugeschaltet werden, wobei die abschaltbaren Einlaßventile zugeschaltet sind.

Alle Absperrorgane können als Drehklappen ausgebildet sein, welche mittels pneumatischer Stelldosen betätigbar sind. Diese wiederum werden über von einem elektronischen Steuergerät der Brennkraftmaschine angesteuerte Taktventile betätigt. Dieses Steuergerät steuert die Taktventile in Abhängigkeit der Brennkraftmaschinendrehzahl und/oder der Last, z.B. der Drosselklappenstellung, an.

Die Erfindung wird nachfolgend beispielhaft anhand einer schematischen Zeichnung erläutert.
Es zeigen
- Fig. 1: eine teilweise geschnittene Seitenansicht der Erfindung,

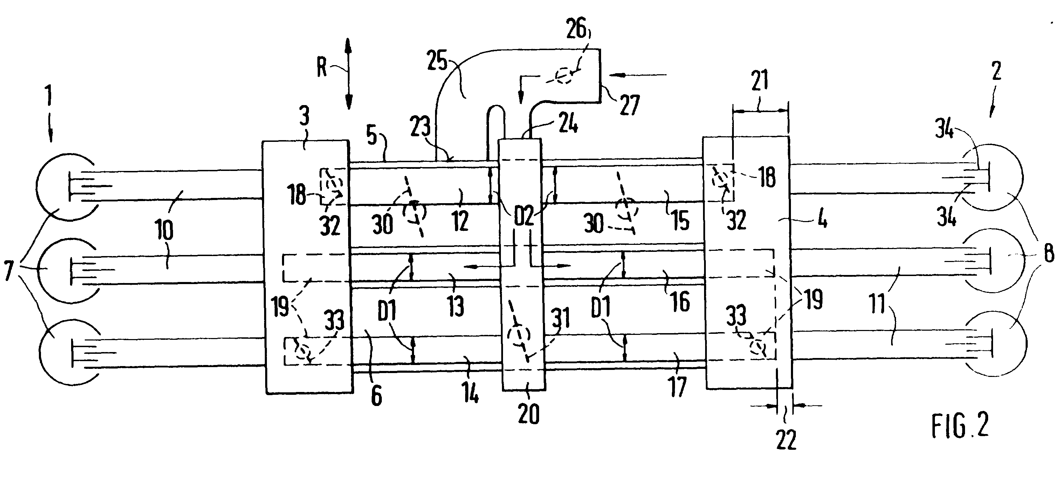

- Fig. 2: eine schematische Draufsicht in Richtung des Pfeiles X gemäß Fig. 1 in einem ersten Zustand,
- Fig. 3: eine schematische Draufsicht in Richtung des Pfeiles X gemäß Fig. 1 in einem weiteren Zustand und
- Fig. 4: eine schematische Draufsicht in Richtung des Pfeiles X gemäß Fig. 1 auf eine Variante der Erfindung.

Eine Brennkraftmaschine mit zwei Zylinderreihen 1, 2 weist ein Luftansaugsystem auf, bestehend aus diesen Zylinderreihen 1, 2 zugeordneten Resonanzbehältern 3, 4, diese miteinander verbindenden ersten und zweiten Verbindungsrohren 5 und 6 und aus den einzelnen Zylindern 7, 8 zu den Resonanzbehältern 3, 4 verlaufenden und mittels Einströmtrichtern 9 an diese angeschlossenen Saugrohren 10, 11.

Jedem Zylinder 7, 8 ist eines der Resonanzrohre 12 bis 17 zugeordnet, welches mit einem Abschnitt 18 oder 19 versehen innerhalb des jeweiligen Resonanzbehälters 3, 4 verläuft und sich bis zu einem in einer Symmetrieebene E-E liegenden Behälter 20 erstreckt. Die Abschnitte 18, 19 liegen jeweils zylindrisch und fluchtend einen Abstand 21, 22 belassend zu den Einströmtrichtern 9.

Das erste Verbindungsrohr 5 und der Behälter 20 weisen jeweils einen Frischlufteintritt 23 bzw. 24 auf, an welche eine Verzweigung 25 angeschlossen ist, der über einen von einer Drosselklappe 26 beherrschten Eintritt 27 Ansaugluft zugeführt wird.

Beiderseits des Frischlufteintrittes 23 ist in dem ersten Verbindungsrohr 5 ein steuerbares Absperrorgan 30 angeordnet, während das zweite Verbindungsrohr 6 ein etwa in der Symmetrieebene E-E liegendes steuerbares Absperrorgan 31 aufweist. Von den jeweils drei nebeneinanderliegenden Resonanzrohren 12, 13, 14 bzw. 15, 16, 17 einer Zylinderreihe 1 bzw. 2 weisen jeweils die beiden außen liegenden 12, 15 bzw. 14, 17 ein steuerbares Absperrorgan 32 bzw. 33 auf.

Zwei Resonanzrohre 13, 14 bzw. 16, 17 einer Zylinderreihe 1 bzw. 2 weisen jeweils einen identischen Durchmesser D1 auf, während das jeweils andere Resonanzrohr 12 bzw. 15 einen etwas größeren Durchmesser D2 aufweist.
Die Verbindungsrohre 5, 6 haben einen identischen Durchmesser D3, welcher in etwa doppelt so groß ist wie der Durchmesser D1 bzw. D2.

Die Resonanzbehälter 3 und 4 verlaufen beabstandet und parallel zur Symmetrieebene E-E, zu der die Verbindungsrohre 5 und 6 senkrecht angeordnet sind. Die Resonanzrohre 12 bis 17 verlaufen in zueinander parallelen und zur Ebene E-E senkrechten Ebenen.

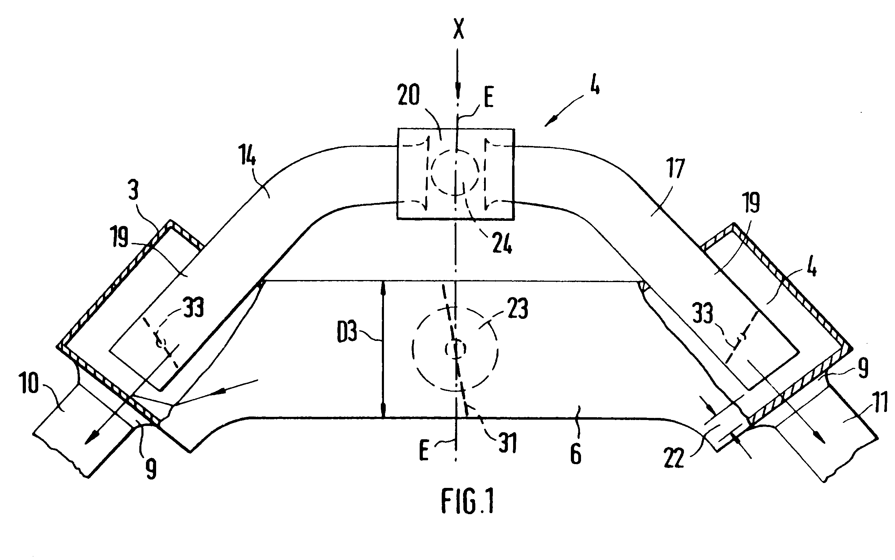

In einem ersten Zustand mit vergleichsweiser niedriger Drehzahl der Brennkraftmaschine gemäß Fig. 1 sind alle Absperrorgane 30 bis 33 geschlossen. Frischluft gelangt über den Behälter 20 und die mittleren Resonanzrohre 13 bzw. 16 in die Resonzbehälter 3 bzw. 4 und von dort über die jeweils zwei Einlaßventile 34 eines Zylinders 7, 8 versorgenden Saugrohre 10 bzw. 11 zu den Zylindern 7 bzw. 8.

Bei weiter steigender Drehzahl werden die Absperrorgane 30 bis 33 kaskadenartig nacheinander zugeschaltet, so daß sich insgesamt fünf Zustände ergeben.
Ein zweiter Zustand wird dabei durch gleichzeitiges Öffnen der Absperrorgane 33 in den Resonanzrohren 14 und 17 erzielt, im dritten Zustand öffnen zusätzlich die Absperrorgane 32 die Resonanzrohre 12 und 15.
In diesen drei Zuständen gelangt die gesamte angesaugte Frischluftmenge ausschließlich über den Behälter 20 zu den Zylindern 7, 8.

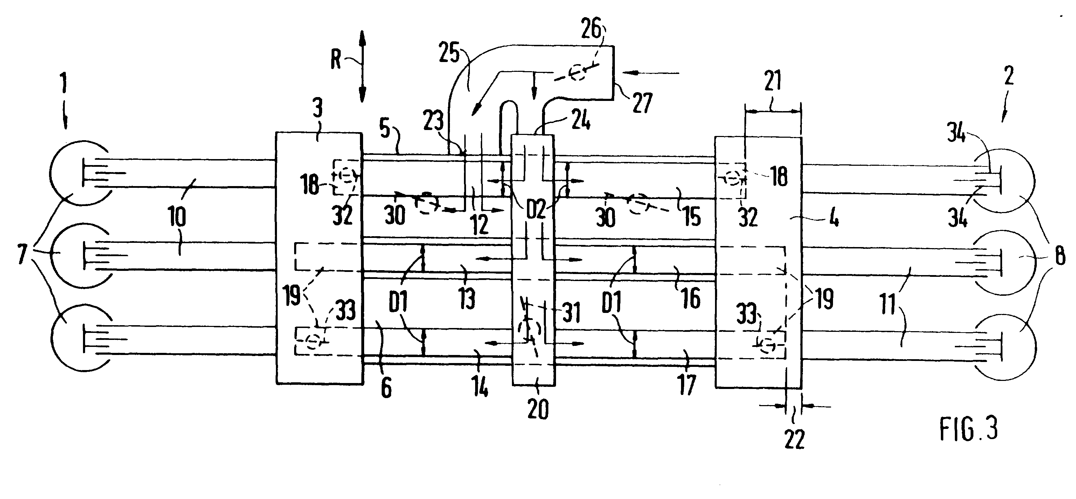

In einem vierten Zustand gemäß Fig. 3 sind die Absperrorgane 30 geöffnet, so daß zusätzlich Ansaugluft über das erste Verbindungsrohr 5 in die Resonanzbehälter 3, 4 strömt. Für höchste Drehzahlen wird abschließend im fünften Zustand Absperrorgan 31 geöffnet, so daß das gesamte im Ansaugsystem vorhandene Volumen angekoppelt ist. Bei sinkender Drehzahl werden die Absperrorgane in umgekehrter Reihenfolge geschlossen.

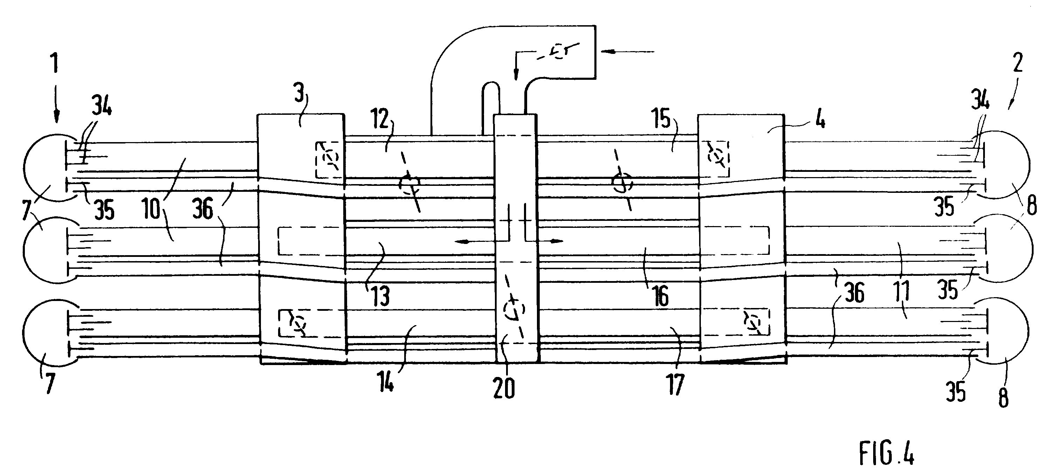

In einer Variante gemäß Fig. 4 weist jeder Zylinder 7, 8 ein weiteres Einlaßventil 35 auf. Jedem dieser Einlaßventile 35 ist ein eigenes Resonanzrohr 36 zugeordnet, welches sich unter Umgehung der Resonanzbehälter 3, 4 direkt von dem Behälter 20 aus zu diesen Einlaßventilen 35 erstreckt und kein Absperrorgan aufweist.
Die Einlaßventile 34 sind hierbei in nicht gezeigter Weise abschaltbar ausgeführt, während die Einlaßventile 35 permanent betrieben werden.

## Patentansprüche

1. Luftansaugsystem einer mehrzylindrigen, zweireihigen Brennkraftmaschine, wobei die Zylinder (7,8) einer Reihe jeweils mit Saugrohren (10,11) an einen dieser Reihe zugeordneten Resonanzbehälter angeschlossen sind, und mit mindestens einem zwischen den Resonanzbehältern verlaufenden Verbindungsrohr (5,6) in das Frischluft einströmt und welches mindestens ein steuerbares Absperrorgan aufweist, **dadurch gekennzeichnet**, daß jedem Zylinder (7, 8) mindestens ein Resonanzrohr (12 bis 17) zugeordnet ist, wobei diese von dem Resonanzbehälter (3, 4) einer Zylinderreihe (1, 2) zu einem den Resonanzrohren gemeinsamen, mit einem Frischlufteintritt (24) versehenen Behälter (20) verlaufend angeordnet sind,
und wobei in mindestens einem der einer Zylinderreihe (7, 8) zugeordneten Resonanzrohre ein steuerbares Absperrorgan (32, 33) angeordnet ist.

2. System nach Anspruch 1, **dadurch gekennzeichnet**, daß in mindestens zwei Resonanzrohren (12, 14 bzw. 15, 17) jeder Zylinderreihe (1bzw. 2) ein steuerbares Absperrorgan (32, 33) angeordnet ist.

3. System nach Anspruch 1, **dadurch gekennzeichnet**, daß parallel zu dem ersten Verbindungsrohr (5) ein zweites Verbindungsrohr (6) zwischen den Resonanzbehältern (3, 4) verlaufend angeordnet ist, welches mindestens ein steuerbares Absperrorgan (31) aufweist.

4. System nach Anspruch 1, **dadurch gekennzeichnet**, daß die Resonanzbehälter (3, 4) beabstandet und parallel beiderseits einer Symmetriebene (E-E) angeordnet sind und der Behälter (20) in dieser Symmetrieebene verlaufend angeordnet ist.

5. System nach Anspruch 4, **dadurch gekennzeichnet**, daß sich die Verbindungsrohre (5, 6) senkrecht zur Symmetrieebene (E-E) zwischen Brennkraftmaschine und Behälter (20) verlaufend erstrecken.

6. System nach Anspruch 1, **dadurch gekennzeichnet**, daß die Resonanzrohre (12 bis 17) abschnittsweise innerhalb der Resonanzbehälter (3, 4) verlaufen.

7. System nach den Ansprüchen 2 und 6, **dadurch gekennzeichnet**, daß die Absperrorgane (32 bzw. 33) in den innerhalb der Resonanzbehälter (3, 4) liegenden Abschnitten (18 bzw. 19) der Resonanzrohre (12, 15 bzw. 14, 17) angeordnet sind.

8. System nach Anspruch 1 oder 7, **dadurch gekennzeichnet**, daß zumindest zwei Resonanzrohre (12, 13 bzw. 15, 16) jeder Zylinderreihe (1 bzw. 2) einen voneinander verschiedenen Durchmesser (D2 bzw. D1) aufweisen.

9. System nach Anspruch 6 oder 8, **dadurch gekennzeichnet**, daß zumindest zwei der innerhalb der Resonanzbehälter (3 bzw. 4) verlaufenden Abschnitte (18, 19) der Resonanzrohre (12, 13, 14 bzw. 15, 16, 17) eine voneinander verschiedene Länge aufweisen.

10. System nach Anspruch 8 oder 9, **dadurch gekennzeichnet**, daß zwei Resonanzrohre (13 und 14, 16 und 17) einer Zylinderreihe (1 und 2) einen identischen Durchmesser (D1) aufweisen, wobei eines (14, 17) dieser Rohre das steuerbare Absperrorgan (33) aufweist.

11. System nach Anspruch 7, **dadurch gekennzeichnet**, daß die Abschnitte (18, 19) zylindrisch und fluchtend zu Einströmtrichtern (9) der Saugrohre (10, 11) liegend ausgebildet und einen Abstand (21, 22) belassend angeordnet sind.

12. System nach Anspruch 3, **dadurch gekennzeichnet**, daß das erste Verbindungsrohr (5) beiderseits der Symmetriebene (E-E) je ein steuerbares Absperrorgan (30) und das zweite Verbindungsrohr (6) ein etwa in dieser Ebene liegendes, steuerbares Absperrorgan (31) aufweist.

13. System nach Anspruch 10, **dadurch gekennzeichnet**, daß jede Zylinderreihe (1 bzw. 2) drei in Längsrichtung (R) der Brennkraftmaschine nebeneinanderliegende Resonanzrohre aufweist, wobei den beiden außenliegenden (12, 14 bzw. 15, 17) die steuerbaren Absperrorgane (32, 33) zugeordnet sind.

14. System nach Anspruch 3, **dadurch gekennzeichnet**, daß die beiden Verbindungsrohre (5, 6) einen identischen Durchmesser (D3) aufweisen, welcher in etwa doppelt so groß ist wie der Durchmesser (D1, D2) der Resonanzrohre (12 bis 17).

15. System nach einem oder mehreren der vorhergehenden Ansprüche, **dadurch gekennzeichnet**, daß jedem Zylinder (7, 8) ein weiteres Resonanzrohr (36) zugeordnet ist, welches sich unter Umgehung der Resonanzbehälter (3, 4) von den Zylindern (7, 8) zum Behälter (20) erstreckt.

## Claims

1. An air-intake system of a multiple-cylinder, two-row internal-combustion engine, in which the cylinders (7, 8) of one row are each connected by induction pipes (10, 11) to a resonance container associated with the said row, and with at least one connecting pipe (5, 6) which extends between the resonance containers (3, 4) and into which fresh air flows and which comprises at least one controllable shut-off member, **characterized in that** at least one resonance tube (12 to 17) is associated with each cylinder (7, 8), wherein the said resonance tubes (12 to 17) are arranged extending from the resonance container (3, 4) of one cylinder row (1, 2) to a container (20) common to the resonance tubes and provided with a fresh-air inlet (24), and wherein a controllable shut-off member (32, 33) is arranged in at least one of the resonance tubes associated with a cylinder row (7, 8).

2. A system according to Claim 1, **characterized in that** a controllable shut-off member (32, 33) is arranged in at least two resonance tubes (12, 14 and 15, 17 respectively) of each cylinder row (1 and 2 respectively).

3. A system according to Claim 1, **characterized in that** a second connecting pipe (6) comprising at least one controllable shut-off member (31) is arranged extending parallel to the first connecting tube (5) and between the resonance containers (3, 4).

4. A system according to Claim 1, **characterized in that** the resonance containers (3, 4) are arranged spaced and parallel on both sides of a plane of symmetry (**E-E**), and the container (20) is arranged extending in the said plane of symmetry.

5. A system according to Claim 4, **characterized in that** the connecting pipes (5, 6) extend at right angles to the plane of symmetry (**E-E**) between the internal-combustion engine and the container (20).

6. A system according to Claim 1, **characterized in that** the resonance tubes (12 to 17) extend in part inside the resonance containers (3, 4).

7. A system according to Claims 2 and 6, **characterized in that** the shut-off members (32 and 33 respectively) are arranged in the portions (18 and 19 respectively) of the resonance tubes (12, 15 and 14, 17 respectively) situated inside the resonance containers (3, 4).

8. A system according to Claim 1 or 7, **characterized in that** at least two resonance tubes (12, 13 and 15, 16 respectively) of each cylinder row (1 and 2 respectively) have a diameter (**D2** and **D1** respectively) which is different from each other.

9. A system according to Claim 6 or 8, **characterized in that** at least two of the portions (18, 19) of the resonance tubes (12, 13, 14 and 15, 16, 17 respectively) extending inside the resonance containers (3, 4) have a length which is different from each other.

10. A system according to Claim 8 or 9, **characterized in that** two resonance tubes (13 and 14, 16 and 17) of one cylinder row (1 and 2) have an identical diameter (**D1**), wherein one (14, 17) of these tubes has the controllable shut-off member (33).

11. A system according to Claim 7, **characterized in that** the portions (18, 19) are cylindrical and are situated in alignment with inflow funnels (9) of the induction pipes (10, 11) and are arranged so as to leave a space (21, 22) therebetween.

12. A system according to Claim 3, **characterized in that** the first connecting pipe (5) has one respective controllable shut-off member (30) on both sides of the plane of symmetry (**E-E**), and the second connecting pipe (6) has a controllable shut-off member (31) situated substantially in the said plane.

13. A system according to Claim 10, **characterized in that** each cylinder row (1 and 2 respectively) has three resonance tubes arranged adjacent to one another in the longitudinal direction (**R**) of the internal-combustion engine, wherein the controllable shut-off members (32, 33) are associated with the two resonance tubes (12, 14 and 15, 17 respectively) situated on the outside.

14. A system according to Claim 3, **characterized in that** the two connecting pipes (5, 6) have an identical diameter (**D3**) which is substantially twice as large as the diameter (**D1**, **D2**) of the resonance tubes (12 to 17).

15. A system according to one or more of the preceding Claims, **characterized in that** each cylinder (7, 8) has associated therewith a further resonance tube (36) extending from the cylinders (7, 8) to the container (20) while by-passing the resonance containers (3, 4).

## Revendications

1. Système d'admission d'air d'un moteur à combustion interne à deux lignes et à plusieurs cylindres, dans lequel les cylindres (7, 8) d'une ligne sont raccordés chacun par des tubes d'admission (10, 11), à un pot de résonance associé à cette ligne, et avec au moins un tube de liaison (5, 6), s'étendant entre les pots de résonance, dans lequel pénètre de l'air frais et qui présente au moins un organe d'arrêt commandable, caractérisé en ce qu'à chaque cylindre (7, 8) est associé au moins un tube de résonance (12 à 17), ceux-ci étant disposés de manière à s'étendre du pot de résonance (3, 4) d'une ligne de cylindres (1, 2) vers un pot (20) pourvu d'une entrée d'air frais (24), commun aux tubes de résonance,
et un organe d'arrêt (32, 33) commandable étant placé dans au moins l'un des tubes de résonance, associés à une ligne de cylindres (7, 8).

2. Système selon la revendication 1, caractérisé en ce qu'un organe d'arrêt (32, 33) commandable est placé dans au moins deux tubes de résonance (12, 14 ou 15, 19) de chaque ligne de cylindres (1 ou 2).

3. Système selon la revendication 1, caractérisé en ce que parallèlement au premier tube de liaison (5) est placé un deuxième tube de liaison (6) s'étendant entre les pots de résonance (3, 4), qui présente au moins un organe d'arrêt (31) commandable.

4. Système selon la revendication 1, caractérisé en ce que les pots de résonance (3, 4) sont disposés espacés et parallèles des deux côtés d'un plan de symétrie (E-E) et le pot (20) est disposé de manière à s'étendre dans ce plan de symétrie.

5. Système selon la revendication 4, caractérisé en ce que les tubes de liaison (5, 6) s'étendent perpendiculairement au plan de symétrie (E-E) entre le moteur à combustion interne et le pot (20).

6. Système selon la revendication 1, caractérisé en ce que les tubes de résonance (12 à 17) s'étendent en partie à l'intérieur des pots de résonance (3, 4).

7. Système selon les revendications 2 et 6, caractérisé en ce que les organes d'arrêt (32 ou 33) sont placés dans les portions (18 ou 19), situées à l'intérieur des pots de résonance (3, 4), des tubes de résonance (12, 15 ou 14, 17).

8. Système selon la revendication 1 ou 7, caractérisé en ce qu'au moins deux tubes de résonance (12, 13 ou 15, 16) de chaque ligne de cylindres (1 ou 2) présentent un diamètre (D2 ou D1) différent l'un de l'autre.

9. Système selon la revendication 6 ou 8, caractérisé en ce qu'au moins deux des portions (18, 19), s'étendant à l'intérieur des pots de résonance (3 ou 4), des tubes de résonance (12, 13, 14 ou 15, 16, 17), présentent une longueur différente l'une de l'autre.

10. Système selon la revendication 8 ou 9, caractérisé en ce que deux tubes de résonance (13 et 14, 16 et 17) d'une ligne de cylindres (1 et 2) présentent un diamètre (D1) identique, l'un (14, 17) de ces tubes comportant l'organe d'arrêt (33) commandable.

11. Système selon la revendication 7, caractérisé en ce que les portions (18, 19) sont cylindriques et alignées avec des cônes d'entrée (9) des tubes d'admission (10, 11) et sont disposées de manière à laisser une distance (21, 22).

12. Système selon la revendication 3, caractérisé en ce que le premier tube de liaison (5) comporte, des deux côtés du plan de symétrie (E-E), un organe d'arrêt (30) commandable et le deuxième tube de liaison (6) comporte un organe d'arrêt (31) commandable, situé à peu près dans ce plan.

13. Système selon la revendication 10, caractérisé en ce que chaque ligne de cylindres (1 ou 2) comporte trois tubes de résonance juxtaposés dans la direction longitudinale (R) du moteur à combustion interne, aux deux tubes extérieurs (12, 14 ou 15, 17) étant associés les organes d'arrêt (32, 33) commandables.

14. Système selon la revendication 3, caractérisé en ce que les deux tubes de liaison (5, 6) présentent un diamètre (D3) identique, qui est à peu près le double du diamètre (D1, D2) des tubes de résonance (12 à 17).

15. Système selon une ou plusieurs des revendications précédentes, caractérisé en ce qu'à chaque cylindre (7, 8) est associé un autre tube de résonance (36), qui s'étend des cylindres (7, 8) vers le pot (20), en contournant les pots de résonance (3, 4).
